# EUROPÄISCHE PATENTANMELDUNG

(11) **EP 0 993 923 A2**
(43) Veröffentlichungstag der Anmeldung: **19.04.2000**
(21) Anmeldenummer: 99113232.5
(22) Anmeldetag: 08.07.1999
(51) Int. Cl.: B29C 31/04, B29C 43/34, B29C 47/00

(54) **Verfahren zur Herstellung von technischen Formteilen wie ein- oder mehrschichtigen Schuhsohlen aus Gummi oder thermoplastischen Werkstoffen sowie Vorrichtung zur Durchführung des Verfahrens**

(30) Priorität: 15.10.1998 DE 19847599
(71) Anmelder: KLÖCKNER DESMA SCHUHMASCHINEN GmbH, 28832 Achim (DE)
(72) Erfinder: Freese, Klaus, Dipl.-Ing., 27299 Langwedel-Etelsen (DE); Koliwer, Wolfgang, Dipl.-Ing., 28832 Achim (DE)
(74) Vertreter: Röther, Peter, Dipl.-Phys.

(57) **Zusammenfassung**

Bei einem Verfahren zur Herstellung von technischen Formteilen wie ein- oder mehrschichtigen Schuhsohlen aus Gummi oder thermoplastischen Werkstoffen, bei dem in das mindestens eine Formnest eines geöffneten Formwerkzeugs einer Spritzgießmaschine, die plastifizierte Masse aus Gummi oder Kunststoff mittels mindestens einer von (einer) Plastifiziereinheit(en) beaufschlagten Düse eingegossen wird, ist erfindungsgemäß vorgesehen, daß die mindestens eine Düse oberhalb des Formnests in die Startposition (A) gefahren wird, die Düse geöffnet und mit variabler geregelter Geschwindigkeit (v₁, v₂, v₃) über die Formnestlänge in die Stop-Position (D) gefahren wird, wobei die Austrittsmenge und -geschwindigkeit aus der Düse durch Veränderung des Düsenöffnungs-Querschnitts entsprechend der Formnest-Geometrie geregelt und in der Stop-Position (D) die Düsenöffnung geschlossen wird, wodurch der Strang der plastifizierten Masse abgeschnitten wird und das Strangende durch eine entsprechende Bewegung der Düse in das Formnest fällt, sodann die Düse aus dem Formwerkzeug herausgefahren und dasselbe geschlossen wird.

## Beschreibung

Die Erfindung betrifft ein Verfahren zur Herstellung von technischen Formteilen wie ein- oder mehrschichtigen Schuhsohlen aus Gummi oder thermoplastischen Werkstoffen, bei dem in das mindestens eine Formnest eines geöffneten Formwerkzeugs einer Spritzgießmaschine die plastifizierte Masse aus Gummi oder Kunststoff mittels mindestens einer von (einer) Plastifiziereinheit(en) beaufschlagten Düse eingegossen wird.

Bei der Fertigung von technischen Formteilen, insbesondere bei der Sohlenfertigung -hierbei bildet ein sogenannter Verdränger den oberen Abschluß des Formnests- und der Direktansohlung - hierbei bildet der mit einem Schaft bezogene Leisten den oberen Abschluß des Formnests- ist ein Formnest mit wechselnden und jeweils ungleichmäßigen Geometrien zu füllen. Wird der Füllvorgang nicht dem Geometrieverlauf und der damit verbundenen unterschiedlichen Masseverteilung angepaßt, entstehen Lufteinschlüsse, Fließmarkierungen und undefinierbare Dichten. Das gilt sowohl für das Spritzgießverfahren mit komplett geschlossener Form, als auch für das Spritzprägeverfahren mit teilgeöffneter Form (auch ITM=Injection Transfer Moulding genannt) als auch für das Gießverfahren mit geöffneter Form.

Bei dieser letztgenannten Methode wird die Düse über das Formnest gefahren und die plastifizierte Masse von oben senkrecht in dieses eingefüllt.
Bei der Herstellung von Sohlen muß das Material im Vorderfußbereich auf einer relativ großen Fläche in einer relativ dünnen Schicht verteilt werden, während im Absatzbereich die auszufüllende Fläche zwar kleiner, dafür aber die Schichtdicke größer ist.

Einer mangelhaften Vorverteilung der Masse kann dabei nach bisherigem Stand der Technik nur durch eine hohe Werkzeugschließkraft entgegengewirkt werden. Mittels dieser hohen Schließkraft erfolgt ein Verpressen der Masse und eine nachträgliche Verteilung. Hohe Schließkräfte verursachen jedoch immer hohe Anlagenkosten, was insbesondere bei Rundtischanlagen ins Gewicht fällt, da bei derartigen Anlagen eine Vielzahl von Formwerkzeugen mit den ihnen zugeordneten Schließeinheiten vorhanden sind.

Darüber hinaus ist die Verwendung von Einlegeteilen in der Form problematisch, da die Gefahr besteht, daß sich diese beim Verpressen und Verteilen der plastifizierten Masse verschieben.

Der Erfindung liegt daher die Aufgabe zugrunde, ein Verfahren der eingangs genannten Art so zu führen, daß bereits beim Füllen des Formnests die individuelle Formnest-Geometrie berücksichtigt wird und nur geringe Schließkräfte erforderlich sind.

Eine weitere Aufgabe der Erfindung liegt in der Angabe einer geeigneten Vorrichtung zur Durchführung des Verfahrens.

Die Erfindung löst die erste Aufgabe gemäß dem kennzeichnenden Teil des Anspruchs 1 dadurch, daß die mindestens eine Düse oberhalb des Formnest in die Startposition gefahren wird, die Düse geöffnet und mit variabler, geregelter Geschwindigkeit über die Formnestlänge in die Stop-Position gefahren wird, wobei die Austrittsmenge und -geschwindigkeit aus der Düse durch Veränderung des Düsenöffnungs-Querschnitts entsprechend der Formnest-Geometrie geregelt und in der Stop-Position die Düsenöffnung geschlossen wird, wodurch der Strang der plastifizierten Masse abgeschnitten wird und das Strangende durch eine entsprechende Bewegung der Düse in das Formnest fällt, sodann die Düse aus dem Formwerkzeug herausgefahren und dasselbe geschlossen wird.

Dadurch, daß beim Einfüllen der plastifizierten Masse in das Formnest die Düse von ihrer Startposition, beispielsweise der Sohlenspitzenbereich, mit geregelter Geschwindigkeit und geregelter Einfüllmenge durch Variation des Düsenöffnungs-Querschnitts in die Stop-Position (Absatzende) verfahren wird, ergibt sich bereits in der Einfüllphase eine optimale Vorverteilung der Masse im Formnest.
Durch die Regelbarkeit kann die Materialmasse im Nest frei vorwählbar positioniert werden, wobei die Masseverteilung dem Konturverlauf der individuellen Formnest-Geometrie angepaßt wird. Nach dem Schließen des Formwerkzeugs entstehen nur noch kurze Fließwege.

Da eine Verteilung der Masse durch den Verpreßvorgang beim Schließen des Werkzeugs nicht erforderlich ist, werden geringere Zuhaltekräfte nötig. Die Verarbeitung, d.h. das Einfüllen von zelligen Elastomermischungen wird einfacher. Da direkt in das geöffnete Werkzeug gefüllt wird, entfällt der Angußkanal. Es fallen somit auch keine störenden Angußreste an, was zu höheren Werkzeugstandzeiten führt, und die Produktivität wird höher, da keine Reinigungsarbeiten an einem Angußkanal erforderlich sind.

Darüberhinaus wird die Fertigung großer Sohlen mit geringer Sohlenstärke einfacher, da die thermische Belastung der Formmasse während des Einfüllens geringer ist.

Weiterhin wird der Einstellaufwand bei der Parameterermittlung nach einem Formenwechsel erleichtert, da eine optische Kontrolle direkt während des ersten Füllvorgangs erfolgen kann.

Schließlich wird die Verwendung von Einlegeteilen in der Form einfacher möglich, da keine hohen Fließkräfte die Einlegeteile verschieben können.

Beim vorgeschlagenen Verfahren ist es unerheblich, ob die Verfahrbewegung der Düse in der einen oder der entgegengesetzten Richtung erfolgt. In jedem Fall erfolgt sie weggesteuert mit jeweils angepasster Austrittsöffnung der Düse entsprechend der jeweils für den zu füllenden Formnestbereich erforderlichen Materialmenge. Diese kann darüberhinaus noch durch die ebenfalls weggesteuerte Vorschubgeschwindigkeit der Plastifizierschnecke im Plastifizier- und Einspritzaggregat beeinflusst werden.

Die Querschnitte der Düsenaustritts-Öffnungen werden mittels weggesteuerter Schieberverschlüsse frei vorwählbar variiert.
Um die Vorverteilung der Masse im Formnest weiter zu optimieren, weisen die Düsen eine Austrittsöffnung gemäß den Merkmalen des Anspruchs 6 auf, derart, daß die mindestens eine Düse eine L-förmige Austrittsöffnung aufweist, wobei der längere L-Schenkel beispielsweise der Sohleninnenkontur zugeordnet ist und die L-Schenkel schräg aufeinander zulaufen. Durch den über die Öffnung fahrbaren Schieber wird während des Füllvorgangs der Öffnungsquerschnitt folgendermaßen verändert:
In der Start-Position (beispielsweise Sohlenspitze) ist lediglich der Scheitelbereich der L-förmigen Öffnung frei. Durch Zurückfahren des Schiebers wird bei der Verfahrbewegung der Düse ein immer größerer Teil der L-Schenkel frei bis (beispielsweise im Fußballenbereich) die Austrittsöffnung komplett freigegeben ist. Danach wird die Öffnung in Richtung Absatz wieder mehr geschlossen und schließlich nach Erreichen der Stop-Position endgültig zugefahren. Dabei wird das Strangende der plastifizierten Masse durch den Schieber abgeschnitten. Durch eine kurze Vorwärtsbewegung der Düse wird bewirkt, daß dieses Strangende ebenfalls in das Formnest fällt.

Gemäß Anspruch 2 ist vorgesehen, daß durch Verwendung von zwei Düsen mit einander spiegelbildlicher Austrittsöffnungs-Geometrie gleichzeitig ein Sohlenpaar gegossen werden kann.

Dabei kann es sich um Düsen handeln, die jeweils eine L-förmige Austrittsöffnung aufweisen, die spiegelbildlich zueinander angeordnet sind.

Bevorzugterweise werden jedoch Düsen gemäß Anspruch 7 eingesetzt, die dadurch gekennzeichnet sind, daß sie zwei hintereinander angeordnete L-förmige Austrittsöffnungen aufweisen, deren Schenkel schräg aufeinander zulaufen, wobei die eine Austrittsöffnung spiegelbildlich zur zweiten ausgebildet ist und die Spiegelachse die Winkelhalbierende der durch die Schenkel gebildeten Winkel ist.
Hierbei ist der Schieber so dimensioniert, daß er beide hintereinander angeordnete Austrittsöffnungen überdecken kann. Für die Herstellung einer linken Sohle ist die der rechten Sohle zugeordnete Öffnung komplett geschlossen und der Öffnungsquerschnitt für die linke Sohle wird in der oben beschriebenen Weise variiert. Bei der Herstellung der rechten Sohle wird entsprechend verfahren.
Eine derartig ausgestaltete Düse hat den Vorteil, daß zur Fertigung eines Sohlenpaares Düsen exakt gleicher Bauart eingesetzt werden können.

Eine weitere vorteilhafte Düsenalternative, die die gleichen Vorteile wie die zuvor genannte aufweist, ist durch die Merkmale des Anspruchs 8 gegeben, bei der die Düse auf einer parabelähnlichen Linie angeordnete runde Bohrungen als Austrittsöffnungen aufweist.

Eine weitere vorteilhafte Ausgestaltung der Erfindung sieht vor, daß die mindestens eine Düse auf ihrem Weg von der Start-Position zur Stop-Position entlang einer definierten Kurve verfahren wird.
Insbesondere bei Sohlen mit ihrer ungleichmäßigen Kontur würde eine gerade Verfahrbewegung zu einer ungleichmäßigen Verteilung der einzufüllenden Masse führen. Durch das Abfahren der genannten definierten Kurve (Mittellinie der Sohle) wird dieser Nachteil beseitigt.

Gemäß Anspruch 9 sind hierzu Düse und Formwerkzeug in x-y-Richtung relativ zueinander verfahrbar.

Gemäß Anspruch 10 kann die Düse zusätzlich zu ihrer Verfahrbewegung von der Start- zur Stop-Position seitlich verschwenkbar sein. Dies geschieht durch Verschwenken des Spritzaggregats auf seinem Unterbau. Bewerkstelligt wird dieses beispielsweise durch einen Druckmittelzylinder.
Der Drehpunkt zwischen Unterbau und Spritzaggregat ist schon vorhanden, da das Aggregat für einen Schneckenwechsel zur Seite geschwenkt werden kann.

Den Weg, um den das Aggregat ausgelenkt wird, kann über Initiatoren oder über einen Wegaufnehmer abgefragt werden.

Es ist jedoch auch möglich, statt der Düse, bzw. des Spritzaggregats das Formwerkzeug, welches auf einem Kreuztisch angeordnet ist, unterhalb der Düsenöffnung so zu verfahren, daß der Auftreffbereich der plastifizierten Masse im Formnest die definierte Mittellinie der Sohle abfährt.

Die Erfindung wird im Folgenden anhand von Zeichnungen dargestellt und näher erläutert.

Es zeigen:
- Fig. 1:: Spritzaggregat mit Düse in verschiedenen Positionen über einem schematisch dargestellten Sohlenformnest
- Fig. 2:: Düsenöffnungs-Geometrie in einer ersten Alternative mit verschiedenen Schieberstellungen
- Fig. 3:: Düsenöffnungs-Geometrie in einer zweiten Alternative mit verschiedenen Schieberstellungen
- Fig. 4:: Düsenöffnungs-Geometrie in einer dritten Alternative mit verschiedenen Schieberstellungen
- Fig. 5:: Einspritzaggregat mit seitlich verschwenkbarer Düse in Draufsicht
- Fig. 6:: Einspritzaggregat gemäß Fig. 5 in Vorderansicht

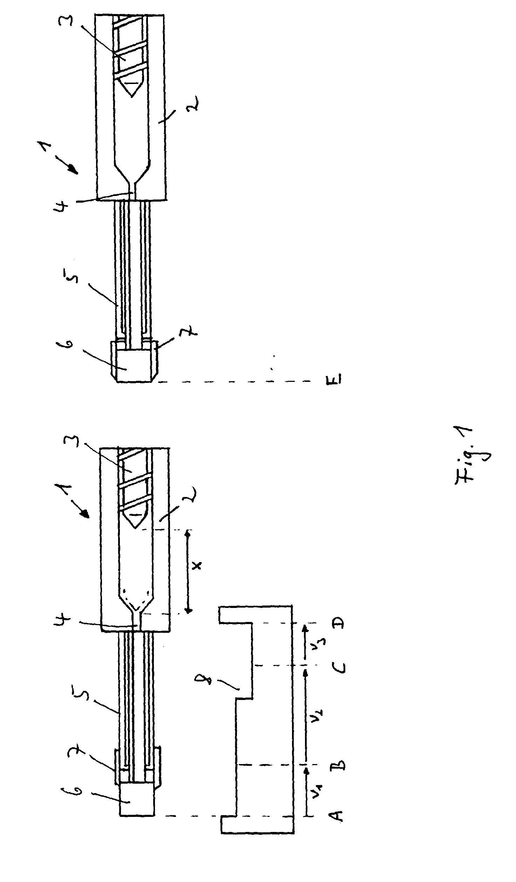

In der Fig. 1 ist ein Plastifizier- und Einspritzaggregat dargestellt und allgemein mit dem Bezugszeichen 1 versehen. Es besteht aus dem Plastifizierzylinder 2 mit einer darin rotierbar und axial verschiebbar angeordneten Schnecke 3. An die Öffnung 4 im Plastifizierzylinder 2 schließt sich eine rohrförmige Verlängerung 5 an, an deren Ende eine Düse 6 angeordnet ist.
Die Düsenaustrittsöffnung ist mittels eines Schiebers 7 verschließbar.

In der linken Zeichnung befindet sich die Düse 6 mit zurückgeschobenem Schieber 7 in der Start-Position A oberhalb des Formnests 8 eines lediglich angedeuteten Formwerkzeugs zur Herstellung von Schuhsohlen aus Gummi oder thermoplastischem Material. Von der Position A fährt das Einspritzaggregat 1 zusammen mit der Düse 6 mit der Geschwindigkeit v₁ in die Position B, von dort mit der Geschwindigkeit v₂ in die Position C und schließlich mit der Geschwindigkeit v₃ in die Stop-Position D.
Dabei wird die Düsenaustrittsöffnung mittels des Schiebers 7 in Abhängigkeit von der Formnest-Geometrie und der jeweils benötigten Menge an plastifiziertem Material mehr oder weniger geöffnet bzw. geschlossen.
Beim Füllvorgang führt die Schnecke 3 die Vorschubbewegung x im Zylinder 2 aus, die weggesteuert variabel sein kann.
Nach erfolgter Füllung des Formnests 8 schließt der Schieber 7 die Düse vollständig, wobei der Strang der plastifizierten Masse abgeschnitten wird. Durch eine kurze Vorwärtsbewegung des Aggregats 1 wird dafür gesorgt, daß das Strangende ebenfalls in das Formnest 8 fällt.

Danach fährt das Einspritzaggregat 1 die Düse 6 aus dem Formnestbereich heraus, wie es in der rechten Zeichnung durch Position E dargestellt ist. Sowohl die Verfahrbewegung des Einspritzaggregats 1 als auch die Schieberbewegung ist weggesteuert.

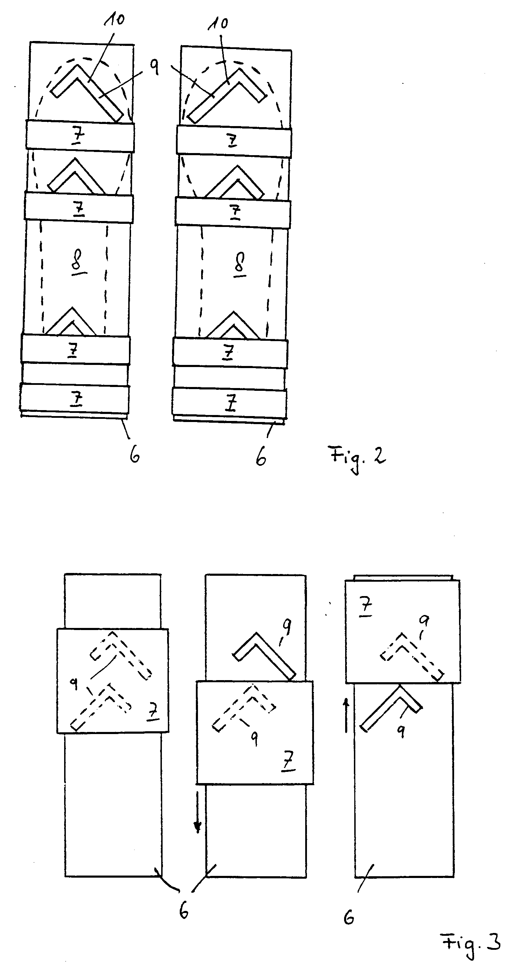

In der Fig. 2 ist eine erste Alternative einer Düsenausgestaltung dargestellt. Unterhalb jeweils einer Düse 6 befindet sich ein Formnest 8 für eine linke bzw. eine rechte Sohle. Die Düsenöffnungs-Querschnitte 9 sind in den Düsen 6 jeweils spiegelbildlich zueinander in Form eines schrägliegenden L ausgestaltet. Der längere L-Schenkel 10 ist jeweils der Sohleninnenkontur zugeordnet.
Schematisch angedeutet ist die Schieberstellung bei den unterschiedlichen Düsenpositionen:
- oben:: vollständig geöffnet
- darunter:: teilweise geschlossen
- darunter:: teilweise geöffnet
- unten:: vollständig geschlossen.

In der Fig. 3 ist eine zweite Alternative einer Düse 6 dargestellt, bei der hintereinander zwei Düsenöffnungs-Querschnitte 9 vorgesehen sind, die ebenfalls L-förmig ausgebildet sind. Der vordere Querschnitt 9 ist jedoch gegenüber dem hinteren gespiegelt.
Der Schieber 7 ist so dimensioniert, daß er beide Düsenöffnungs-Querschnitte 9 überdecken kann. Dies ist in der linken Darstellung der Fig.3 gezeigt.
In der mittleren Darstellung ist der hintere Querschnitt 9 geschlossen, der vordere geöffnet. Durch Verschieben des Schiebers 7 in Richtung vorderer Querschnitt 9 läßt sich die Düse 6 zur Herstellung einer linken Sohle verwenden, wie bezüglich Fig.2 ausgeführt.
In der rechten Darstellung ist der vordere Querschnitt 9 geschlossen und der hintere geöffnet. Durch Verschieben des Schiebers 7 in Richtung hinterer Querschnitt 9 läßt sich dieselbe Düse 6 nun zur Herstellung einer rechten Sohle verwenden.

Zum Gleichzeitigen Herstellen eines Sohlenpaares werden somit im Gegensatz zum Ausführungsbeispiel gemäß Fig. 2 baugleiche Düsen 6 verwendet.

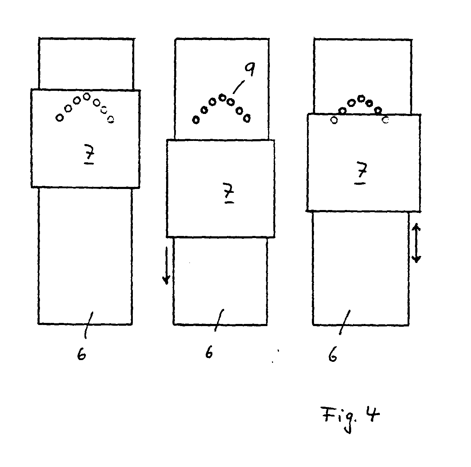

Dieser Vorteil trifft auch auf die dritte Alternative einer Düse 6 zu, wie sie in Fig. 4 dargestellt ist.
Hier sind die Düsenöffnungen 9 als eine Mehrzahl von runden Bohrungen, die auf einer parabelförmigen Linie angeordnet sind, verwirklicht.
In der linken Darstellung schließt der Schieber 7 alle Bohrungen ab. In der mittleren Darstellung sind alle Bohrungen frei, und der rechten Darstellung verdeckt der Schieber 7 lediglich einen Teil der Bohrungen.

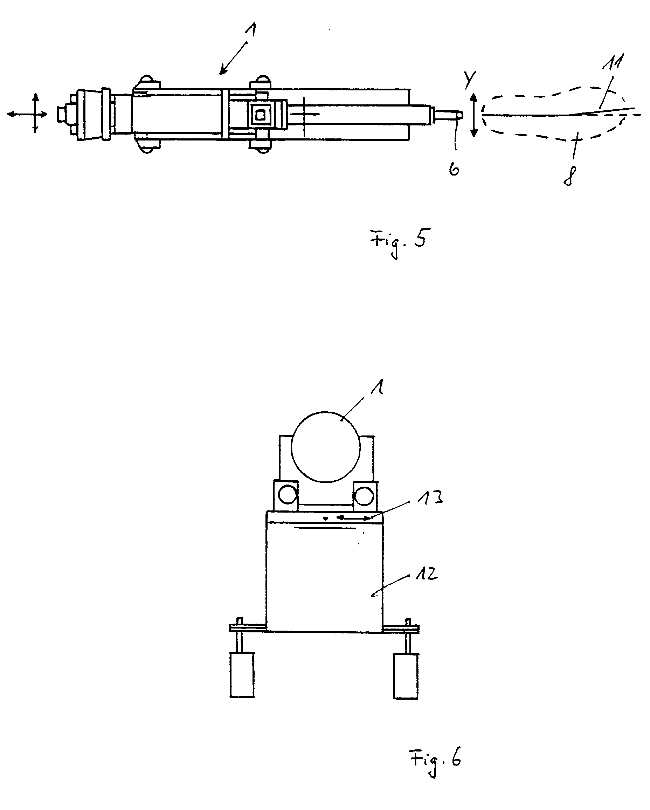

In der Fig. 5 ist das Plastifizier- und Einspritzaggregat 1 in Draufsicht dargestellt. Angedeutet ist das Formnest 8. Die durchgezogene Linie 11 im Formnest 8 stellt den Weg der Düsenöffnung 9 beim Einfüllvorgang dar. Man erkennt, daß beim Zurückfahren des Aggregats 1 bzw. der Düse 6 die Düsenöffnung 9 einen kurvenförmigen Verlauf beschreibt und von der axialen Richtung (gestrichelt) abweicht. Dies wird durch eine seitliche Verschwenkbewegung y des Aggregats 1 bewirkt, welches -wie aus Fig. 6 hervorgeht- auf einem stationären Unterbau 12 montiert ist. Mittels eines lediglich angedeuteten Druckmittelzylinders 13 wird das Aggregat 1 verschwenkt, derart, daß beim Einfüllvorgang der Massestrang im Bereich der tatsächlichen, gekrümmten Mittellinie des Formnests 8 auftrifft.
Andere mechanische Kurvenführungen sind denkbar.

## Patentansprüche

1. Verfahren zur Herstellung von technischen Formteilen wie ein- oder mehrschichtigen Schuhsohlen aus Gummi oder thermoplastischen Werkstoffen, bei dem in das mindestens eine Formnest eines geöffneten Formwerkzeugs einer Spritzgießmaschine, die plastifizierte Masse aus Gummioder Kunststoff mittels mindestens einer von (einer) Plastifiziereinheit(en) beaufschlagten Düse eingegossen wird,
dadurch gekennzeichnet,
daß die mindestens eine Düse (6) oberhalb des Formnests (8) in die Startposition (A) gefahren wird, die Düse (6) geöffnet und mit variabler geregelter Geschwindigkeit (v₁, v₂, v₃) über die Formnestlänge in die Stop-Position (D) gefahren wird, wobei die Austrittsmenge und - geschwindigkeit aus der Düse (6) durch Veränderung desDüsenöffnungs-Querschnitts (9) entsprechend der Formnest-Geometrie geregelt und in der Stop-Position (D) die Düsenöffnung (9) geschlossen wird, wodurch der Strang derplastifizierten Masse abgeschnitten wird und das Strangende durch eine entsprechende Bewegung der Düse (6) in das Formnest (8) fällt, sodann die Düse aus dem Formwerkzeug herausgefahren und dasselbe geschlossen wird.

2. Verfahren nach Anspruch 1,
dadurch gekennzeichnet,
daß mittels zweier, mit zueinander spiegelbildlicher Austrittsöffnungs-Geometrie versehenen Düsen (6) zwei Sohlen gleichzeitig gegossen werden.

3. Verfahren nach Anspruch 1 oder 2,
dadurch gekennzeichnet, daß während des Gießvorganges die Vorschubbewegung derPlastifizierschnecke (3) geregelt erfolgt.

4. Verfahren nach einem der Ansprüche 1 bis 3,
dadurch gekennzeichnet,
daß die mindestens eine Düse (6) auf ihrem Weg von der Start- zur Stop-Position entlang einer definierten Kurve geführt wird.

5. Vorrichtung zur Durchführung des Verfahrens nach einem der Ansprüche 1 bis 4 mit einem mindestens ein Formnest aufweisenden Formwerkzeug, einer Plastifiziereinheit mit mindestens einer in das geöffnete Formwerkzeug oberhalb des Formnests einfahrbaren Düse, deren Austrittsöffnung auf das Formnest gerichtet ist,
dadurch gekennzeichnet,
daß die Düse (6) vom einen Formnestende zum anderen mit regelbarer Geschwindigkeit verfahrbar ist, wobei der Düsenöffnungsquerschnitt (9) mittels eines Schiebers (7) stufenlos von vollständig geöffnet bis vollständig geschlossen weggesteuert in Abhängigkeit von der Formnest Geometrie variierbar ist.

6. Vorrichtung nach Anspruch 5,
dadurch gekennzeichnet,
daß die mindestens eine Düse (6) eine L-förmige Austrittsöffnung (9) aufweist und die L-Schenkel schräg aufeinander zulaufen.

7. Vorrichtung nach Anspruch 5,
dadurch gekennzeichnet,
daß die mindestens eine Düse (6) zwei hintereinander angeordnete L-förmige Austrittsöffnungen (9) aufweist, deren Schenkel schräg aufeinander zulaufen, wobei die eine Austrittsöffnung spiegelbildlich zur zweiten ausgebildet ist und die Spiegelachse die Winkelhalbierende des durch die Schenkel gebildeten Winkels ist.

8. Vorrichtung nach Anspruch 5,
dadurch gekennzeichnet,
daß die Düse (6) auf einer parabelähnlichen Linie angeordnete runde Bohrungen als Austrittsöffnungen (9) aufweist.

9. Vorrichtung nach einem der Ansprüche 5 bis 8,
dadurch gekennzeichnet,
daß Düse (6) und Formnest (8) in x-y-Richtung relativ zueinander verfahrbar sind.

10. Vorrichtung nach Anspruch 9,
dadurch gekennzeichnet, daß die Düse (6) quer zur Verfahrrichtung (x-Richtung) verschwenkbar ist.

11. Vorrichtung nach Anspruch 9,
dadurch gekennzeichnet,
daß das Formnest (8) aufweisende Formwerkzeug in x-y-Richtung verfahrbar ist.

12. Vorrichtung nach einem der Ansprüche 5 bis 11,
dadurch gekennzeichnet,
daß der Plastifizierschnecke (3) eine Wegsteuerung zugeordnet ist.

13. Vorrichtung nach einem der Ansprüche 5 bis 12,
dadurch gekennzeichnet, daß dem Schieber (7) vor der Düsenaustrittsöffnung (9) eine Wegsteuerung zugeordnet ist.
